Europäisches Patentamt

European Patent Office    (11) Publication number: **0 025 063**

Office européen des brevets    **B1**

⑱

(12)    EUROPEAN PATENT SPECIFICATION

(45) Date of publication of patent specification: **04.12.85**    (51) Int. Cl.⁴: **B 29 C 67/20**

(21) Application number: **80900654.7**

(22) Date of filing: **17.03.80**

(86) International application number:
**PCT/US80/00276**

(87) International publication number:
**WO 80/01889 18.09.80 Gazette 80/21**

(54) **LOW DENSITY, EXTRUDED ETHYLENIC POLYMER FOAMS.**

(30) Priority: **15.03.79 US 20681**

(43) Date of publication of application:
**18.03.81 Bulletin 81/11**

(45) Publication of the grant of the patent:
**04.12.85 Bulletin 85/49**

(84) Designated Contracting States:
**AT CH DE FR GB NL SE**

(56) References cited:
**US-A-3 067 147**
**US-A-3 227 664**
**US-A-3 253 066**
**US-A-3 379 802**
**US-A-3 491 032**
**US-A-3 542 715**
**US-A-3 558 532**
**US-A-3 640 915**
**US-A-3 663 668**
**US-A-3 766 099**
**US-A-3 871 897**
**US-A-3 953 558**
**US-A-4 101 467**
**US-A-4 129 530**

(73) Proprietor: **THE DOW CHEMICAL COMPANY**
**2030 Dow Center Abbott Road P.O. Box 1967**
**Midland, MI 48640 (US)**

(72) Inventor: **ZABROCKI, Vincent S.**
**249 Westmoor**
**Newark, OH 43055 (US)**
Inventor: **BUSSEY, Marlin G.**
**338 Deer Trail Drive**
**Thortonville, OH 43076 (US)**

(74) Representative: **Casalonga, Axel**
**BUREAU D.A. CASALONGA OFFICE JOSSE &**
**PETIT Baaderstrasse 12-14**
**D-8000 München 5 (DE)**

Courier Press, Leamington Spa, England.

# 0 025 063

**Description**

This invention relates to foamed articles of ethylenic polymers. It also pertains to improvement in process whereby are obtained ethylenic polymer foam planks having low density, dimensional stability, and substantially closed-cell structures.

The term "low density ethylenic polymer foam planks" as used herein means cellular structures made from ethylenic polymers having densities from 13 to 29 g/l (0.8 to 1.8 pounds per cubic foot) (pcf)), a cross-sectional area of at least 38.7 cm$^2$ (6 square inches), and a minimal cross-sectional dimension of at least, 1.2 cm (0.5 inch).

It is well known to make closed-cell ethylenic polymer resin foams by the process of extrusion foaming wherein a normally solid thermoplastic ethylenic polymer resin such as polyethylene is heat-plastified and mixed under pressure with a volatile material such as 1,2-dichlorotetrafluoroethane to form a flowable gel which is then passed through a shaping orifice or die opening into a zone of lower pressure. Upon the release of pressure, the volatile constituent of the gel vaporizes, forming a gas phase cellular structure in the gel which cools to a corresponding cellular foamed solid resin. Desirably, the resulting gas cells are substantially uniform in size, uniformly distributed through the foam body, and closed, i.e., separated from each other by membrane walls of resin. Although a number of general principles are thought to be understood, much of the extrusion foaming technology is empirical, based on experience, and directed to very specific materials and details to produce saleable products of narrowly defined specification.

One of the common requirements of acceptable foam resin products is dimensional stability, i.e., it is desired that the linear dimensions and thus the volume of a piece of foam resin not change appreciably, either to shrink or to expand, under ordinary conditions, from the time its manufacture is complete until the time its ultimate useful life is ended. It is also desired that if any appreciable shrinking of a foam is to occur, which is usually the case with a freshly extruded foam, the foam be able to recover within a reasonable period of time to a substantially constant volume close to that of the foam measured shortly after its extrusion. The difficulties of attaining dimensional stability are particularly acute in foams of relatively low density (high expansion ratio) when the resin membrane cell walls are relatively thin. It has been explained that the vapors of volatile material originally present in the cell gradually permeate the cell wall and escape from the foam over a period of time, thereby tending to reduce the inner cell pressure and tending to cause the foam to shrink during that time. However, when the foam is exposed to ambient atmosphere, air and its constituent gases also tend to permeate into the foam through the cell wall over a period of time thereby tending to increase the inner cell pressure. The difficulties of attaining dimensional stability are further accentuated in relatively thick foams, i.e., foam planks. It has been observed that with such foams the time to reach substantially constant, commercially acceptable volume is relatively long, i.e., more time is required for rates of diffusion of residual blowing agent out of the foams and air into such foams to balance. Accordingly, the actual change in cell gas pressure and size is the result of complex and often opposite forces, and the resultant effect on resin foam dimensions is difficult to predict.

Polyethylene foam planks having thickness greater than about 1,27 cm (0.5 inch), dimensional stability, and substantially closed-cell structure are well known items of commerce. Well known end use applications of such planks are found in the packaging, automotive, construction, contact and water sports and appliance markets. However, the planks known to date have foam density greater than about 32 g/l (2.0 pounds per cubic foot). In spite of the economic incentive associated with more efficient use of raw materials, attempts to produce foam planks having density lower than 2.0 pounds per cubic foot using the conventional extrusion technology known in the art have met with repeated failures. As a result, there are no foam planks having thickness greater than about 1,27 cm (0.5 inch) and having foam density lower than about 32 g/l (2.0 pounds per cubic foot) made by the process of continuous extrusion foaming. Nevertheless, there is a need and desire for foam planks having foam density lower than that of conventional planks for the end use applications discussed hereinabove.

US—A—4 101 467 describes low density, closed cell, soft foams prepared by using low stiffness copolymers and a mixture of two types of blowing agents the first group of blowing agent having a value for the critical quantity Tb—0.5 Vc of not less than 125 and the second group of blowing agents having a critical quantity Tb—0.5 Vc value of not greater than 110 (Tb and Vc being defined thereafter). No low density polyethylene foam desired according to invention are produced.

Accordingly, an object of this invention is to provide improved ethylenic polymer foam planks. Another object is to provide a method for making such foam planks. A particular object is to provide such an improved method for making ethylenic polymer foam planks having dimensional stability, substantially closed-cell structure, and foam density lower than that of the conventional ethylenic polymer foam planks known to date. Other objects and advantages of the present invention are brought out in the description that follows.

The objects of this invention are obtained by a method for making dimensionally stable, substantially closed-cell foam planks from a non-crosslinked ethylenic resin, said planks having a cross-sectional area of at least 38.7 cm$^2$ (6 square inches) and a minimal cross-sectional dimension of at least 1.2 cm (0.5 inch) by extrusion foaming of a blowable gel composition of a polyethylene resin consisting essentially of low density polyethylene or a blend of at least 70 percent by weight of low density polyethylene and up to 30 percent by weight of ethylene copolymer with another olefin, a carboxylic acid, or an alkylester of a

2

**0 025 063**

monoethylenically unsaturated carboxylic acid, and of a fluorocarbon blowing agent selected from fluorocarbons having a normal boiling point between −30 and 30°C, from 2 to 4 carbon atoms in its molecular structure, and a value for the critical quantity $T_b$ − 0.5 Vc of between 110 and 145, where Tb is the normal boiling point temperature of the fluorocarbon in degree Kelvin and Vc is its critical volume in cubic centimeters per gram mole the flowable gel of polyethylene resin and fluorocarbon blowing agent being passed through an intensive mixer to thoroughly disperse the fluorocarbon blowing agent in the gel to an amount from 13.5 to $35 \times 10^{-4}$ moles per gram of the ethylenic polymer resin, the resulting flowable gel being extruded through a die and released into ambient air atmosphere to form a substantially closed cell foam plank having a density of 13 to 29 g/l (0.8 to 1.8 pcf).

Resin foam plank having dimensional stability, substantially closed-cell structure, a cross-sectional area of at least 38.7 cm² (6 square inches) and a minimal cross-sectional dimension of at least 1.2 cm (0.5 inch), characterized in that the polyethylene resin consists essentially of low density polyethylene or a blend of at least 70 percent by weight of low density polyethylene and up to 30 percent by weight of ethylene copolymer with another olefin, a carboxylic acid, or an alkyl ester of a monoethylenically unsaturated carboxylic acid, the foam plank has a density of 13 to 29 g/l (0.8 to 1.8 pcf) and is obtainable by using the method as above defined.

The ethylenic polymer resins used in the present invention include low density polyethylene (LDPE), blends of LDPE with up to about 30% by weight of medium density polyethylene, and blends of LDPE with up to about 30% by weight of ethylene copolymers which comprise ethylene and at least one monoethylenically unsaturated comonomer, especially another olefin or a carboxylic acid or an alkyl ester of a monoethylenically unsaturated carboxylic acid. Examples of such copolymers include ethylenepropylene copolymer, ethylene acrylic acid, ethylenemethyl methacrylate copolymer, ethylene vinyl acetate copolymer and the like. Methods of making ethylenic polymer resins described hereinabove are readily known in the art.

The term "low density polyethylene" as used herein means branched polyethylene having a density from about 0.910 to about 0.930 g/cc and a melt index from about 0.1 to about 10 dg/min, preferably from about 0.2 to about 2.5 dg/min, and most preferably from about 0.2 to about 1.0 dg/min.

The medium density polyethylene which is used in accordance with this invention may have a density from about 0.931 to about 0.940. Blends of one or more of low density polyethylene are also included provided that the resultant blends have a melt index within the range described hereinabove.

In accordance with this invention, blowing agent comprises at least one volatile fluorocarbon. The term fluorocarbon is used herein to mean halocarbons containing carbon and fluorine atoms, any other atoms being limited to hydrogen or chlorine atoms. The symbol "FC" hereinafter stands for "fluorocarbon" and numbers are chosen for convenience in referring to these fluorocarbon compounds.

The blowing agent which would provide satisfactory low density ethylenic polymer foam planks comprises at least one fluorocarbon selected from the group I fluorocarbons having two to four carbon atoms in their molecular structure, normal boiling points, i.e., under standard one atmosphere pressure, between −30°C and 30°C and a value for the critical quantity $T_b$ −0.5 $V_c$ of between 110 to 145 where $T_b$ is the normal boiling point temperature of the fluorocarbon in degrees Kelvin and $V_c$ is its critical mole volume in cubic centimeters per gram-mole. [The critical volume of a substance can be experimentally measured, and the values of many are reported in the literature. It can also be computed as the reciprocal of the critical density, converted to gram-mole basis. Approximate values of critical volume can also be calculated from the molecular structure according to the Lydersen equation as described in "Chemical Process Principles" by Olaf A. Hougen, K. M. Watson and R. A. Ragatz, 2nd Edition, published (1954) by John Wiley & Sons, New York, page 88 and Table 6, page 91. The Lydersen equation is $V_c = 40 + \Sigma \Delta v$ where $V_c$ is the critical volume in cubic centimeters per gram-mole and $\Sigma \Delta v$ is the summation of the contributions for each atom or atomic group that is present, using values set out in Table 6 on page 91 of the publication]. Specific examples of such group I fluorocarbons are 1,2-dichlorotetrafluoroethane (FC-114), 1-chloro-1,2,2,2-tetrafluoroethane (FC-124A), 1-chloro-1,1,2,2-tetrafluoroethane (FC-124), and 1,1,1-trifluoropropane (FC-263). Each of these fluorocarbons has a normal boiling point temperature between −30 to 30°C and a value for $T_b$ −0.5 $V_c$ between 110—145. There can be up to about 0.35 gram-mole of such blowing agent per 100 grams of resin in the flowable gel.

Preferably the blowing agent comprises at least one fluorocarbon selected from the group II fluorocarbons consisting of trichlorofluoromethane (FC-11), dichlorodifluoromethane (FC-12), 1,1,2-trichloro-1,2,2-trifluoroethane (FC-113), 1-chloro-1,1-difluoroethane (FC-142B), 1,1-difluoroethane (FC-152A) and 2,2-difluoropropane (FC-272), provided, however an effective amount of stearamide, for example, from about 0.3 to about 3.0 percent, preferably from about 0.5 to about 1.5 percent, by weight based on the weight of the ethylenic polymer resin, is used in conjunction with the blowing agent to impart the desired dimensional stability to the resultant foam planks.

Up to about 25 parts by weight of the fluorocarbons of group I can be replaced by at least one fluorocarbon selected from group II, provided that the resultant foam planks are dimensionally stable as defined hereinbelow.

The blowing agent is compounded into the starting ethylenic polymer resins in proportions to make the desired degree of expansion in the resulting foamed cellular product, usually up to about 75-fold volume expansion to make products having aged foam densities down to about 0.013 g/cc (about 0.8

3

pound per cubic foot). Depending upon the starting proportion of blowing agent, the resulting foam products, i.e., foam planks, of this invention have densities from 13 to 29 g/l (0.8 to 1.8 pounds per cubic foot (pcf). The maximum useful proportions of such blowing agent(s) in composition of flowable, foamable gel is in the range of 0.135 to 0.35 gram-mole per 100 grams of the starting ethylenic polymer resins.

The blowing agent is compounded into the starting ethylenic polymer resin in conventional fashion to make a flowable gel, preferably in continuous manner, e.g., in a mixing extruder, using heat to plastify the resin, pressure to maintain the blowing agent in non-gaseous state, and mechanical working to obtain a thorough mixing of the resin and blowing agent. The resulting gel is then cooled if necessary and passed through a suitable die orifice into a zone of low pressure, e.g., normal ambient air temperature, where it expands to a low density, cellular mass. As the foamed extrusion forms, it is taken away from the extruder, allowed to cool to harden the ethylenic polymer resin, and collected for further processing, storage or other disposal.

The resulting ethylenic polymer resin foam planks have densities most preferably from about 19.3 to about 25.7 g/l (1.2 to about 1.6 pounds per cubic foot) dimensional stability, substantially closed-cell structure, a cross-sectional area of at least 38.7 cm$^2$ (six square inches) and a minimal cross-sectional dimension of at least 1.2 cm (0.5 inch) preferably at least 1.8 cm (0.75 inch).

The gas space of the cells of the resulting polyethylene blend foam originally comprises as an essential constituent the particular blowing agent(s) used to make the foams. As time passes, the blowing agent diffuses out of the foam cells and is gradually replaced by air diffusing into such cells. Ultimately, the gas space of the foam cells is essentially occupied by air.

It is essential and critical to the present invention that adequate and thorough dispersion of the blowing agent in the ethylenic polymer resins be obtained. More specifically, it is essential and critical to thoroughly disperse from about 13.5 to about $35 \times 10^{-4}$ moles of the fluorocarbon blowing agent(s) per gram of ethylenic polymer resin. The present invention is not limited by the type of mixer used to carry out adequate and thorough mixing of the blowing agent in the ethylenic polymers. A number of well known static or dynamic mixers can be used to thoroughly disperse the fluorocarbon blowing agent in the flowable gel to an amount from about 13.5 to $35 \times 10^{-4}$ moles per gram of ethylenic polymer resin. An attempt to incorporate an additional amount of the blowing agent into the gel without thorough mixing would result in an unsatisfactory product. More specifically, the resulting ethylenic polymer resin foam planks would have blow holes, striations in the cross-sectional area and/or uneven cell size distribution and the like.

An interfacial surface generator may be placed in between the conventional gel extruder and cooler in operative communication therewith. By the term "interfacial surface generator" is meant an in-line motionless mixer, sometimes referred to as a static mixer or static pipe mixer, whose mixing mechanism is generally unrelated to the throughput when the throughput is flowing in the region of streamline flow. Such mixers may be considered as layering mixers wherein the flowing stream is divided and two component parts reshaped and joined together in such a way that the interface between the original elements of the stream is substantially increased. Such mixers are well known in the art and some of these mixers and their mode of operations are described in the following U.S. Patents: 3,206,170; 3,239,197; 3,286,992; 3,328,003; 3,358,749; 3,382,534; 3,394,924; 3,404,869; 3,406,947; 3,506,244; 3,860,217; and 3,918,688.

A rotary mixing device containing intermeshing studs on the rotor and the outer cylinder shell may be placed in between the conventional gel extruder and the cooler in operative communication therewith to ensure adequate and thorough dispersion of the blowing agent in the ethylenic polymer resins.

Finely divided solid materials such as calcium silicate, zinc stearate, magnesium silicate and the like can advantageously be incorporated with the ethylenic polymer or gel prior to expanding the same. Such finely divided materials aid in controlling the size of the cells, and are usually employed in amounts up to one (1) percent by weight of the polymer.

Numerous fillers, pigments, lubricants, antioxidants and the like well known in the art can also be incorporated into the ethylenic polymer as desired.

For the present purposes, dimensional stability of the foam planks refer to changes which occur in foam plank volume, particularly in later stages of manufacture and during subsequent storage of the foam product. The dimensional stability of the foam products is measured by observing the changes in volume occurring in a test specimen of the foam plank as a function of time. The test specimen is obtained by quickly cutting, from the foam product soon, e.g., within five minutes, after its formation, a piece and accurately measuring its overall volume, e.g., by cubic displacement of water. The initial volume of this specimen is arbitrarily selected as the bench mark volume for the subsequent dimensional stability study. The foam plank specimen is exposed to air at atmospheric pressure and ordinary room temperature; its volume is re-measured from time to time and related on a volume percentage basis to the initial volume.

In general manufacturing practice, an ethylenic polymer foam plank is considered to be dimensionally stable for practical purposes if the minimum volume to which the foam plank shrinks is not less than about 85, preferably not less than about 90, percent of the initial bench mark volume, and if the volume of the foam plank four weeks, preferably three weeks, after its extrusion is not less than 90 percent of the initial volume and is substantially constant thereafter under ambient atmospheric conditions. The term

**0 025 063**

"dimensionally stable" in reference to the subject ethylenic polymer foam planks is used herein in the sense of the foregoing definitive description.

The specific working examples that follow are intended to illustrate the invention but are not to be taken as limiting its scope. In the examples, parts and percentages are by weight unless otherwise specified or required by the context.

Example 1

Polyethylene having a melt index of 2.3 and a density of 0.921 g/cc is introduced to a plastics extruder having the usual sequential zones denominated by a feed zone, compression zone, metering zone and mixing zone. The normally solid polyethylene is heat-plastified in the extruder and forwarded under pressure of the screw to which a volatile fluorocarbon 1,2-dichlorotetrafluoroethane is then injected as the blowing agent. The body of mass containing the blowing agent and molten polymer is then mixed via conventional mixing techniques known in the art of producing cellular polyethylene. The partially mixed gel then passes through an intensive mixer with an average residence time of 4.0 minutes. The intensive mixer used in this example has a rotating stud rotor enclosed within a housing which also has a studded internal surface that intermeshes with the studs on the rotor, the gel flow being in a generally axial direction. The variable speed rotor creates a wide selection of mixing intensity. The intermeshing studs of the mixer had a relative velocity of 25 feet per minute. The gel leaving the intensive mixer is then cooled to approximately 105°C and is thereafter extruded or discharged through an orifice into a zone of lower pressure, e.g., the atmosphere, wherein the extruded material expands to form a cellular body.

Talc was added along with the polymer to aid in controlling the size of the cells. Blowing agent is increased in a stepwise manner while carefully examining the resultant foam product. A plurality of quality stable foams are produced as shown in Tables I and II. The nucleator, talc, is varied inversely with blowing agent level to hold the average cell size of the foam to about 1.2—1.4 mm. Aged densities of these foams ranged from 33.67 g/l (2.09 pcf) to a low of 19.3 g/l (1.20 pcf).

TABLE I

| Test No. | Foam density[1] g/l  pcf | Blowing agent[2] concentration[3] | Talc concentration[3] |
|---|---|---|---|
| 1.1* | 33.67 (2.09) | 23 | 0.35 |
| 1.2 | 26.42 (1.64) | 27 | 0.20 |
| 1.3 | 22.55 (1.40) | 33 | 0.10 |
| 1.4 | 19.33 (1.20) | 38 | 0.06 |

Notes:

*=Not an example of this invention

[1]=Density of foam plank aged for a minimum of 90 days in pounds per cubic foot

[2]=1,2-dichlorotetrafluoroethane

[3]=Concentration in parts per hundred of polymer.

TABLE II

| Test No. | Cross-section of foam (inches) | Foam density g/l  pcf[1] | Vertical compressive strength[2] kg/cm² psi | Tensile strength | | | | Compressive creep (%)[4] |
|---|---|---|---|---|---|---|---|---|
| | | | | Machine Direction kg/cm²  psi | | Cross Direction[3] kg/cm²  psi | | |
| 2.1* | 1.75×7 | 33.67 (2.09) | 0.588 (8.4) | 4.31 (61.6) | | 2.70 (38.6) | | 0.6 |
| 2.2 | 1.6×7 | 26.42 (1.64) | 0.497 (7.1) | 3.57 (51.0) | | 2.00 (28.6) | | 1.6 |
| 2.3 | 1.3×7 | 22.55 (1.40) | 0.322 (4.6) | 4.34 (62.0) | | 2.04 (29.2) | | 5.4 |
| 2.4 | 1.125×7 1/4 | 19.33 (1.20) | 0.259 (3.7) | 3.92 (56.0) | | 1.89 (27.0) | | 19.0 |

Notes:

*=Not an example of this invention.

[1]=Density of foam plank aged for a minimum of 90 days measured per ASTM D-3575-77-C.

[2]=Vertical compressive strength at 25% deflection measured per ASTM D-3575-77-B.

[3]=Tensile strength measured per ASTM D-3575-77-E.

[4]=Compressive creep at 1.0 psi after 1 week measured per ASTM D-3575-77-BB.

5

Example 2

Polyethylene with a melt index of 0.7 and a density of 0.922 is extruded through the same process as described in Example 1. Residence time within the intensive mixer is reduced to 2.0 minutes. Relative velocity of the intermeshing studs is varied as set forth in Table III. A plurality of quality, stable foams are produced with various 1,2-dichlorotetrafluoroethane levels as shown in Tables III and IV.

TABLE III

| Test No. | Foam density[1] | Blowing agent[2] level[3] | Talc[3] | Mixer stud velocity cm/sec | F/mm |
|---|---|---|---|---|---|
| 3.5 | 1.88 | 24 | .25 | 7.98 | (15.7) |
| 3.6 | 1.39 | 31 | .06 | 11.94 | (23.5) |
| 3.7 | 1.28 | 36 | .04 | 16.26 | (32.0) |
| 3.8 | 1.10 | 47 | — | 32.00 | (63.0) |

Notes:

[1], [2] and [3] Same as Table I

TABLE IV

| Test No. | Cross-section cm | inches | Foam density g/l | pcf[1] | Vertical compressive strength[2] kg/cm² | psi[2] | Compressive creep (%)[3] | Open-cell content (%)[4] |
|---|---|---|---|---|---|---|---|---|
| 4.5 | 5.66×22.86 | (2.23×9.0) | 22.39 | (1.39) | 0.441 | (6.3) | 2.7 | 9.9 |
| 4.6 | 5.08×22.86 | (2.0×9.0) | 20.62 | (1.28) | 0.406 | (5.8) | 7.5 | 1.1 |
| 4.7 | 4.32×22.86 | 1.7×9.0 | 17.72 | (1.10) | 0.343 | (4.9) | ND | 7.5 |

Notes:

[1]=Density of foam plank aged for a minimum of 90 days measured per ASTM D-3575-77-C.
[2]=Average compressive strength at 25% deflection measured per ASTM D-3575-77-B.
[3]=Compressive creep at 1.0 psi, after 1000 hours measured per ASTM D-3575-77-BB.
[4]=Open-cell content measured per ASTM D-3575-77-DD.

Volume changes in percent based on 5 minute initial volume have been measured on Test No. 4.5 and repeated in Table V. The sample which is a typical foam plank of the present invention is dimensionally stable as defined hereinabove.

TABLE V

Foam volume changes in percent based on 5-minute initial volume

| Test No. | Foam density g/l | pcf | Volume percent after time in days 1 | 4 | 9 | 18 |
|---|---|---|---|---|---|---|
| 4.5 | 22.39 | (1.39) | 88.4 | — | 87.6 | 87.0 |
| 5.2 | 20.94 | (1.30) | 96.4 | 96.6 | — | 96.7 |

Example 3

Polyethylene used in Example 2 is extruded through the same processing equipment as described in Example 1. Average residence time within the intensive mixer is 4.0 minutes with the intermeshing studs having a relative velocity of 15.75 cm/s (31 feet per minute). Stearamide at 0.75 g per 100 g of polymer is added along with $19.83×10^{-4}$ moles of dichlorodifluoromethane per gram of polymer. The resulting foam plank has a cross-section of 4.32 cm×13.43 cm (1.7 in×7.9 in) and a density of 22.07 g/l (1.37 pcf). Volume changes in percent based on 5 minute initial volume have been measured and reported in Table V as Test No. 5.2. As seen from Table V, the sample of Test No. 5.2 is dimensionally stable as defined hereinabove.

In place of the particular ethylene polymer or blowing agent used in the preceding examples, there can be used other ethylenic polymers or blowing agents with substantially similar results in obtaining low density foam planks having dimensional stability and substantially closed-cell structure.

In place of the particular mixing device used in the preceding examples, one or more of the other mixing devices described hereinabove, but not limited thereto, can also be used with substantially similar results.

Example 4

The process as described in Example 1 was duplicated with replacement of the rotary mixing device by five identical elements of in-line motionless mixers. Said static mixers were of the Sulzer Brothers Design licensed by Koch Engineering Co. Inc., each element having 15 corrugated sheets and an L/D ratio of 1.0. Each element is also being aligned 90° about the flow axis from the adjacent elements. 1,2-Dichlorotetrafluoroethane at 35 parts per 100 parts of polymer was injected and mixed via conventional and static mixer techniques. Talc was added at .08 parts per 100 parts of polymer for cell size control. The resulting foam plank had a density of 22.72 g/l (1.41 pcf and a cross-section of 3.81 cm×19.8 cm (1.5 in×7.8 in).

Example 5

Polyethylene used in Example 2 is extruded through the same processing equipment as described in Example 1. Average residence time within the intensive mixer is 4.0 minutes with the intermeshing studs having a relative velocity of 23.11 cm/s (45.5 feet per minute). Stearamide at 1.5 g per 100 g of polymer is added along with .04 parts of talc. A mixed blowing agent was used consisting of 70% by weight of dichlorodifluoromethane and 30% by weight of trichlorofluoromethane. Total blowing agent mass rate being 28 parts per 100 parts of polymer. The resulting foam had a cross section of 4.55×20.57 cm of (1.79 in×8.1 in) and a density of 23.20 g/l (1.44 pcf) after five days of aging time. Volume change based on 5 minute initial volume was 90.6% after 5 days of aging.

**Claims**

1. A method for making dimensionally stable, substantially closed-cell foam planks from a non-crosslinked ethylenic resin, said planks having a cross-sectional area of at least 38.7 cm$^2$ (6 square inches) and a minimal cross-sectional dimension of at least 1.2 cm (0.5 inch) by extrusion foaming of a blowable gel composition of a polyethylene resin consisting essentially of low density polyethylene or a blend of at least 70 percent by weight of low density polyethylene and up to 30 percent by weight of ethylene copolymer with another olefin, a carboxylic acid, or an alkylester of a monoethylenically unsaturated carboxylic acid, and of a fluorocarbon blowing agent selected from fluorocarbons having a normal boiling point between −30 and 30°C, from 2 to 4 carbon atoms in its molecular structure, and a value for the critical quantity $T_b−0.5$ Vc of between 110 and 145, where Tb is the normal boiling point temperature of the fluorocarbon in degree Kelvin and Vc is its critical volume in cubic centimeters per gram mole, the flowable gel of polyethylene resin and fluorocarbon blowing agent being passed through an intensive mixer to thoroughly disperse the fluorocarbon blowing agent in the gel to an amount from 13.5 to 35×10$^{-4}$ moles per gram of the ethylenic polymer resin, the resulting flowable gel being extruded through a die and released into ambient air atmosphere to form a substantially closed cell foam plank having a density of 13 to 29 g/l (0.8 to 1.8 pcf).

2. The method of Claim 1 wherein the fluorocarbons are 1,2-dichlorotetrafluoroethane, 1-chloro-1,2,2,2-tetrafluoroethane, 1-chloro-1,1,2,2-tetrafluoroethane and 1,1,1-trifluoropropane.

3. The method of Claim 1 wherein the carboxylic acid is acrylic acid.

4. Resin foam plank having dimensional stability, substantially closed-cell structure, a cross-sectional area of at least 38.7 cm$^2$ (6 square inches) and a minimal cross-sectional dimension of at least 1.2 cm (0.5 inch), characterized in that the polyethylene resin consists essentially of low density polyethylene or a blend of at least 70 percent by weight of low density polyethylene and up to 30 percent by weight of ethylene copolymer with another olefin, a carboxylic acid, or an alkyl ester of a monoethylenically unsaturated carboxylic acid, the foam plank has a density of 13 to 29 g/l (0.8 to 1.8 pcf) and is obtainable by using the method as defined in any one of Claims 1 to 3.

**Patentansprüche**

1. Verfahren zur Herstellung dimensionsstabiler, im wesentlichen geschlossenzelliger Schaumstoffplatten aus einem unvernetzten äthylenischen Harz, welche Platten eine Querschnittsfläche von mindestens 38,7 cm$^2$ (6 square inch) und eine Mindest-Querschnittsabmessung von mindestens 1,2 cm (0,5 inch) haben, durch Extrusionsschäumen einer schäumbaren Gelzusammensetzung eines Polyäthylenharzes bestehend im wesentlichen aus Polyäthylen niedriger Dichte oder einem Gemisch von mindestens 70 Gew.-% Polyäthylen niedriger Dichte und bis 30 Gew.-% Äthylencopolymer mit einem anderen Olefin, einer Carbonsäure oder einem Alkylester einer monoäthylenisch ungesättigten Carbonsäure, und einem Fluorcarbon-Treibmittel ausgewählt aus Fluorcarbonen mit einem normalen Siedepunkt zwischen −30 und 30°C, 2 bis 4 Kohlenstoffatomen in seiner Molekülstruktur, und einem Wert für die kritische Menge $T_b−0,5$

**0 025 063**

Vc zwischen 110 und 145, wobei $Tb_x$ die normale Siedetemperatur des Fluorcarbons in Grad Kelvin und Vc sein kritisches Volumen in Kubikzentimetern je Grammol ist, wobei das schäumbare Gel von Polyäthylenharz und Fluorcarbon-Treibmittel durch einen Intensivmischer geführt wird, um das Fluorcarbon-Treibmittel gründlich in dem Gel in einer Menge von 13,5 bis $35 \times 10^{-4}$ Mol je Gramm des äthylenischen Polymerharzes zu dispergieren und das resultierende schäumbare Gel durch eine Düse extrudiert und in Umgebungsluftatmosphäre freigesetzt wird unter Bildung einer im wesentlichn geschlossenzelligen Schaumstoffplatte mit einer Dichte von 13 bis 29 g/l (0,8 bis 1,8 pcf).

2. Verfahren nach Anspruch 1, dadurch gekennzeichnet, daß die Fluorcarbone 1,2-Dichlortetrafluoräthan, 1-Chlor-1,2,2,2-tetrafluoräthan, 1-Chlor-1,1,2,2-tetrafluoräthan und 1,1,1-Trifluorpropan sind.

3. Verfahren nach Anspruch 1, dadurch gekennzeichnet, daß die Carbonsäure Acrylsäure ist.

4. Harzschaumstoffplatte mit Dimensionsstabilität, im wesentlich geschlossenzelliger Struktur, einer Querschnittsfläche von mindestens 38,7 cm² (6 square inch) und einer Mindest-Querschnittsabmessung von mindestens 1,2 cm (0,5 inch), dadurch gekennzeichnet, daß das Polyäthylenharz im wesentlichen besteht aus Polyäthylen niedriger Dichte oder einem Gemisch von mindestens 70 Gew.-% Polyäthylen niedriger Dichte und bis 30 Gew.-% Äthylencopolymer mit einem anderen Polyolefin, einer Carbonsäure oder einem Alkylester einer monoäthylenisch ungesättigten Carbonsäure, die Schaumstoffplatte eine Dichte von 13 bis 29 g/l (0,8 bis 1,8 pcf) hat und erhältlich ist unter Anwendung des Verfahrens gemäß einem der Ansprüche 1 bis 3.

**Revendications**

1. Procédé pour la fabrication de planches de mousse à alvéoles essentiellement fermées, de dimensions stables, à partir d'une résine éthylénique non-réticulée, lesdites planches ayant une surface de section transversale d'au moins 38,7 cm² (6 pouces carrés) et une dimension minimale de section transversale d'au moins 1,2 cm (0,5 pouce), par transformation en mousse par extrusion d'un gel gonflable composé d'un résine de polyéthylène constituée essentiellement de polyéthylène basse densité ou d'un mélange d'au moins 70% en poids de polyéthylène basse densité et de jusqu'à 30% en poids de copolymère d'éthylène avec une autre oléfine, un acide carboxylique ou un ester alkylique d'un acide carboxylique à insaturation monoéthylénique, et d'un agent gonflant fluorocarboné choisi parmi des fluorocarbures, ayant un point d'ébullition normal situé entre −30 et 30°C, de 2 à 4 atomes dans sa structure moléculaire, et une valeur de la quantité critique $T_b$ −0,5 Vc comprise entre 110 et 145, $T_b$ étant la température du point d'ébullition normal du fluorocarbure en degrés Kelvin et Vc étant son volume critique en centimètres cubes par molécule-gramme, en faisant passer le gel fluable de résine de polyéthylène et l'agent gonflant fluorocarboné à travers un mélangeur puissant pour disperser intimement l'agent gonflant fluorocarboné dans le gel en une quantité allant de 13,5 à $35 \times 10^{-4}$ mole par gramme de la résine de polymère éthylénique, le gel fluable résultant étant extrudé à travers une filière et libéré dans l'atmosphère de l'air ambiant pour constituer une planche de mousse à alvéoles essentiellement fermées ayant une densité allant de 13 à 29 g/l (0.8 à 1,8 pcf).

2. Procédé selon la revendication 1, dans lequel les fluorocarburs sont le 1,2-dichlorotétrafluoroéthane, le 1-chloro-1,2,2,2-tétrafluoroéthane, le 1-chloro-1,1,2,2-tétrafluoroéthane et le 1,1,1-trifluoropropane.

3. Procédé selon la revendication 1, dans lequel l'acide carboxylique est de l'acide acrylique.

4. Planche de mousse de résine de dimensions stables, ayant une structure d'alvéoles essentiellement fermées, une surface de section transversale d'au moins 38,7 cm² (6 pouces carrés) et une dimension de section transversale minimal d'au moins 1,2 cm (0,5 pouce), caractérisée par le fait que la résine de polyéthylène est constituée essentiellement de polyéthylène basse densité ou d'un mélange d'au moins 70% en poids de polyéthylène basse densité et de jusqu'à 30% en poids de copolymère d'éthylène avec une autre oléfine, un acide carboxylique ou un ester alkylique d'un acide carboxylique à insaturation monoéthylénique, que la planche de mousse a une densité allant de 13 à 29 g/l (0,8 à 1,8 pcf) et qu'elle peut être obtenue en utilisant le procédé tel qu'il est défini dans l'une quelconque des revendication 1 à 3.